# EUROPEAN PATENT APPLICATION

(11) **EP 3 731 172 A1**
(43) Date of publication of application: **28.10.2020**
(21) Application number: 20167534.5
(22) Date of filing: 01.04.2020
(51) Int. Cl.: G06Q 50/06, G06Q 10/04

(54) **SYSTEM AND METHOD FOR DISTRICT ENERGY MANAGEMENT**

(30) Priority: 26.04.2019 US 201962839498 P
(71) Applicant: Carrier Corporation, Palm Beach Gardens, FL 33418 (US)
(72) Inventor: RIVERSO, Stefano, Cork City (IE); MANGANINI, Giorgio, Cork City (IE); TORCHIO, Marcello, Cork City (IE)
(74) Representative: Dehns

(57) **Abstract**

A method (200) of controlling power consumption for a district (18) includes discovering (204) a topology of the district and solving (210) an optimization control problem that represents optimized power consumption of the district over time, the optimization control problem is based on the topology of the district. A method (300) of responding to a request from a power source and a district energy management system (26) are also disclosed.

## Description

The present invention relates to methods used for controlling power consumption for a district, as well as to a district energy management system.

Buildings, such as university buildings, office buildings, residential buildings, commercial buildings, and the like, incorporate one or more systems and devices powered by energy from utilities such as electrical energy from a grid or thermal energy from a utility such as a natural gas source. Buildings are organized into "districts" by geographic location, for example. The districts communicate with the power utilities regarding power demand and availability.

A method of controlling power consumption for a district according to a first aspect of the present invention includes discovering a topology of the district and solving an optimization control problem that represents optimized power consumption of the district over time, and the optimization control problem is based on the topology of the district.

Optionally, the solution of the optimization control problem is communicated to at least one component of the district for implementation.

Optionally, the component includes at least one of a powered system/device, a power storage device, and a generator.

Optionally, the solution of the optimization control problem is translated into a human-readable format.

Optionally, the human-readable format includes rules.

Optionally, discovering includes discovering nodes in the district.

Optionally, the nodes are characterized and the optimization control problem is based on a character of nodes.

Optionally, the optimization control problem is a mini-max problem.

Optionally, the method is performed by a district energy management system.

A method of responding to a request from a power source according to a second aspect of the present invention includes detecting whether there is an active request from a power source, gathering real-time information about power consumption from components in a district, and solving an optimization control problem that represents optimized power consumption of the district over time when there is an active request from a power source. The optimization control problem is based on the active request from the power source and on the real-time information about power consumption from components in a district.

Optionally, a topology of the district is discovered, and the optimization control problem is based on the topology of the district.

Optionally, discovering includes discovering nodes in the district.

Optionally, the nodes and optimization control problem is based on a character of the nodes.

Optionally, the solution of the optimization control problem is translated into a human-readable format.

Optionally, the human-readable format includes rules.

Optionally, the optimization control problem is a min-max problem.

A district energy management system according to a further aspect of the present invention includes a computing device. The computing device is configured to discover a topology of a district, solve an optimization control problem that represents optimized power consumption of the district over time, the optimization control problem being based on the topology of the district, and communicate the solution of the optimization control problem to at least one component in the district.

Optionally, at least one component includes at least one of a powered system/device, a power storage device, and a generator.

Optionally, the district includes at least one building. At least one building includes at least one component, and the communicating includes communication via a building energy management system for the at least one building.

Optionally, the district energy management system is operable to receive requests from a power source.

Certain exemplary embodiments will now be described in greater detail by way of example only and with reference to the accompanying drawings in which:
Figure 1 schematically illustrates a district of buildings.
Figure 2 schematically shows an example method of controlling power consumption for the district of Figure 1.
Figure 3 schematically illustrates a method for demand-side management for the district of Figure 1.

Demand-side management (DSM) for systems and devices includes various methods and directives for reducing power demand on centralized power sources (e.g., power utilities) by the systems and devices. The power can be electrical power, thermal power, or another type of power. These methods and directives can include incorporating alternative and/or renewable energy sources, (e.g., solar power or other forms of renewable energy, local generators), incorporating power storage systems, and controlling flexible power demands. Generally, the power source is in communication with the systems or devices to which it provides power. The power source and systems/devices share information and make decisions about how and when to produce and consume power. In this way, DSM allows a power source, such as a "smart" electrical grid for electrical power, in one example, to balance power production and consumption.

Where the power demand of the system/device is flexible, DSM can be employed to improve the efficiency of power generation. The power source communicates information about power generation and consumption to the systems/devices. In this way, the systems/devices can respond to the information from the power source. For instance, at peak demand times, the systems/devices can reduce power consumption.

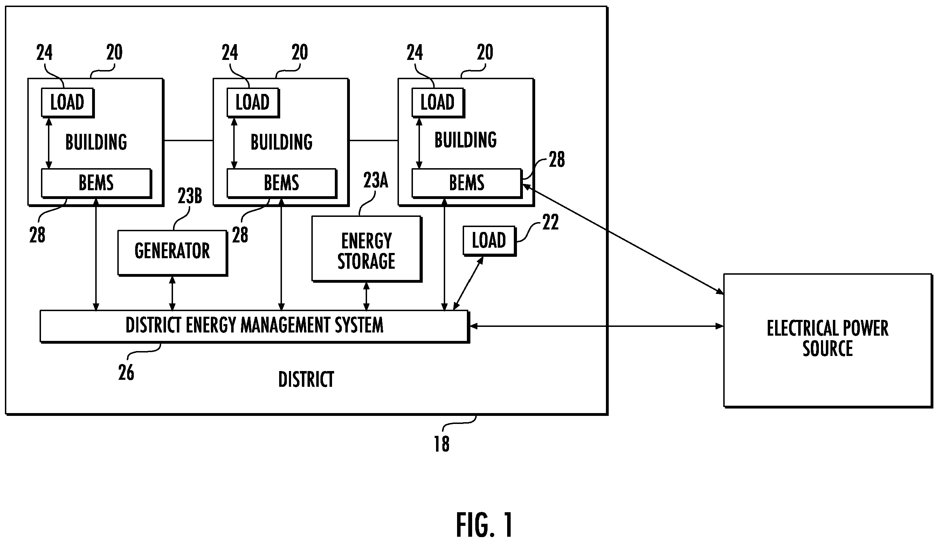

Figure 1 schematically shows example buildings 20 in an example district 18. For example, the district 18 includes one or more buildings 20 that are geographically close to one another, though in general, district 18 may include buildings 20 that are organized other than by geographic location. The district 18 includes systems/devices 22. In some examples, the district 18 includes an energy storage device 23a and/or a generator 23b. Though one energy storage device 23a and one generator 23b are shown in Figure 1, the district 18 may include more than one energy storage device 23a and/or generator 23b in other examples.

The buildings 20 also include powered systems/devices 24, such as climate/heating, ventilation, cooling, and air conditioning (HVAC) systems, lighting systems, and security systems. These systems can be powered by electrical power, thermal power, other types of power, or combinations thereof. For instance, the HVAC may be powered by electrical and thermal power.

The systems/devices (loads) 22, 24 consume power from power source, which may be a public utility. For instance, a power source for electrical power can be a "smart grid." The overall energy consumption of the district 18 depends on the particular characteristics of the district 18, including the number and type of loads 22, 24, the number and type of buildings 20, the arrangement of the buildings 20 and loads 22, 24 within the district 18, the geographical location of the district 18, etc. The energy consumption of the district 18 is cumulative of the energy consumption of each load 22 and each buildings 20. The energy consumption of each building 20 is cumulative of the energy consumption of each load 24.

The district 18 includes a District Energy Management System 26 (DEMS). The DEMS 26 is or includes a computing device, such as a processor, that is configured to receive and analyze information regarding the power requirements of buildings 20, systems/devices 22, energy storage devices 23a, and/or generators 23b in the district 18. The DEMS 26 is also configured to communicate information to a power source regarding power consumption of the district 18. The DEMS 26 is also configured to formulate and solve control problems to optimize power consumption and demand of the district 18 according to the methods described below.

Each building 20 includes a Building Energy Management System 28 (BEMS). The BEMS 28 is or includes a computing device, such as a processor, that is configured to receive and analyze information regarding power requirements for loads 24 in the building 20. Loads 24 may include controllers that are configured to communicate with the BEMS 28 and control operation of the loads 24. The controllers include a computing device such as a processor and/or electronics that enable the controllers to perform the methods described herein.

The BEMS 28 is also configured to communicate information regarding power consumption and demand of the building 20 to one or both of DEMS 26 and the power source.

Though the DEMS 26 and BEMS 28 are shown in the district 18 and building 20 (respectively) in Figure 1, it should be understood that the DEMS 26 and BEMS 28 may in whole or in part be deployed at a location remote from the district 18/building 20, e.g., via cloud technology.

Other components of the district 18 (e.g., loads 22, energy storage devices 23a, and generators 23b) may include controllers that are configured to communicate with the DEMS 26 and control operation of their respective components. The controllers include a computing device such as a processor and/or electronics that enable the controllers to perform the methods described herein.

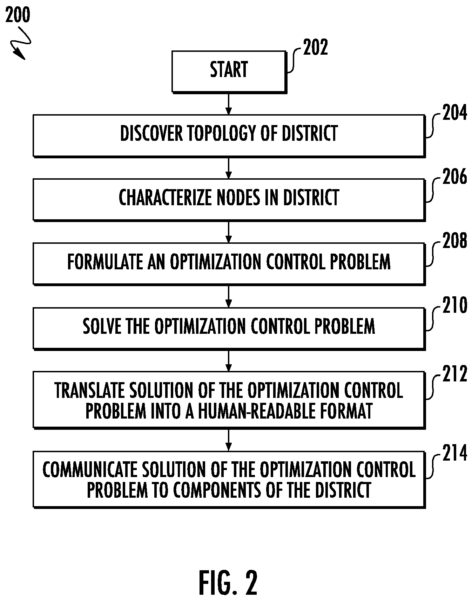

Figure 2 schematically shows an example method 200 of controlling power consumption for district 18. In one example, the method 200 can control power consumption of a particular type of power, e.g., electrical, thermal, etc. In other examples, the method can control power consumption of multiple types of power.

In step 202, the method 200 starts. In one example, the method 200 starts automatically, or without any user input. In one example, the method 200 starts automatically due to an automatic request from a power source (e.g., a smart grid, for electrical power). In another example, the DEMS 26 is programmed to start the method 200 at a predetermined time of day. In another example, the DEMS 26 is programmed to start the method 200 at predetermined time intervals.

In step 204, the DEMS 26 discovers the topology of the district 18. The topology of the district 18 includes the particular characteristics of the district 18, such as the number and type of loads 22, 24, the number and type of buildings 20, the arrangement of the buildings 20 and loads 22, 24 within the district 18, the geographical location of the district 18, etc. The DEMS 26 can obtain information from a geographical information system (GIS) or other public information libraries regarding the topology of the district 18. For example, the DEMS 26 can obtain information about the climate and sunrise/sundown times (which are related to HVAC/lighting requirements of buildings 20 in the district 18) from the GIS. As another example, the DEMS 26 can obtain information about the type of buildings 20 in the district and the size of the buildings 20, which is related to the occupancy of the building 20 and thus the HVAC, lighting, and security requirements of the building 20.

The topology of district 18 also includes nodes within the district 18, which can be discovered by any known node discovery protocol. Nodes are connections between the various components of the district 18 that indicate the presence of one or more loads 22, 24. For example, nodes can be connections between the DEMS 26 and BEMS 28, between the DEMS 26 and loads 22, between the BEMS 28 and loads 24, and so on.

In step 206, the DEMS 26 characterizes the nodes discovered in step 204 according to the type of connection by matching identifying information from the topology of the district discovered in step 204 with the nodes. For example, a node can be characterized as a connection of a building 20 to the DEMS 26. More particularly, a node can be characterized as a connection of a particular type of building 20, such as a public building, residential building, etc. based in information obtained from the GIS in step 204.

In step 208, the DEMS 26 formulates an optimization control problem based on the topology of the district 18 discovered in step 204 and the characterization of nodes in step 206 according to known optimization control theories and methods. The optimization control problem is a solvable mathematical equation or set of equations that represents optimized power consumption of the district 18 over time for various types of power (e.g., electrical, thermal, etc.). The optimization control problem includes inputs and outputs which are assigned based on the topology of the district discovered in step 204 and the characterization of the nodes in step 206. For example, a node at a public building 20 may include inputs and outputs which are related to occupant comfort requirements for that building 20.

In one example, the optimization control problem is based at least in part on known energy consumption models for known nodes that are available in a model library. In this example, the formulating includes communicating with a model library, which may be remote from the district 18. The known energy consumption models are selected for inclusion in the optimization control problem based on the identification of district topology in step 204 and the categorization of nodes in step 206. For example, if a node is categorized as a residential building 20, an energy consumption model for a consumer load profile is selected. As another example, if a node is a generator 23b, an energy production model for the generator 23b is selected. In some examples, the model library includes energy consumption/generation models for particular models of loads 22, 24 and energy storage devices 23a/generators 23b from various manufacturers.

In one example, the optimization control problem is a "min-max" problem, which is a type of mathematical problem that seeks to minimize the maximum value of various decision variables, e.g., energy consumption of the district 18, while still meeting the energy requirements for operation of the district 18. In this way, the optimization control problem balances energy consumption amongst the nodes. In a particular example, the optimization control problem is a min-max problem corresponding to a request from the power source. That is, the optimization control problem takes into account the request from the power source, as is discussed in more detail below.

In step 210, the DEMS 26 solves the optimization control problem from step 208 using known any known software method. For instance, the DEMS 26 is programmed with software that enables it to solve the optimization control problem. In this example, the DEMS 26 can solve the optimization control problem "off-line," e.g., without being in communication with the internet. In this example, the DEMS 26 solves the optimization control problem prior to communicating the solution to other parts of the district, as will be discussed below. Since in this example the optimization control problem is not solved in real-time, the solution can be in the form of an approximate solution which is selected to replicate the form of real-time solutions calculated according to other example methods described herein. In another example, the DEMS 26 accesses software remote from it that is operable to solve the optimization control problem by cloud technology.

In step 212, the DEMS 26 translates the solution to the optimization control problem in step 210 into a human-readable format. For example, the DEMS 26 translates the solution from step 210 into rules. For instance, one example rule is a maximum power usage for a particular load 22, 24 in the district. In one example, the rules are in an "if/then" format. One example rule is that if the time is after the closing of a public building 20, the lighting system 24 in the building 20 operates at a reduced power consumption. Translating the solution to a human-readable format allows a user/operator of the district 18 to read and understand the rules. In one example, a user/operator may review the rules and change or "tune" them.

In step 214, the DEMS 26 communicates the solution of the optimization control problem the components of the district, including buildings 20 (via BEMS 28), loads 22, energy storage devices 23a, and generators 23b (via their respective controllers) for implementation by the respective components. The components are configured to implement the rules from step 214 in real-time.

Optionally, after step 214, the method 200 can be repeated to generate new rules, for example, to take into account changes in district 18 topology over time. As discussed above, the method 200 can re-start automatically, at predetermined time intervals, or upon a request from the power source.

Because the method 200 discovers the topology of the district 18 and takes the topology into account in generating a solution to the optimization control problem, the method 200 can be used to determine rules for any district 18, irrespective of particular district 18 characteristics. Furthermore, the optimization control problem is adapted for the particular district 18 characteristics because the district 18 topology is taken into account. Therefore, the method 200 provides improved optimization and control of the power consumption of the district 18.

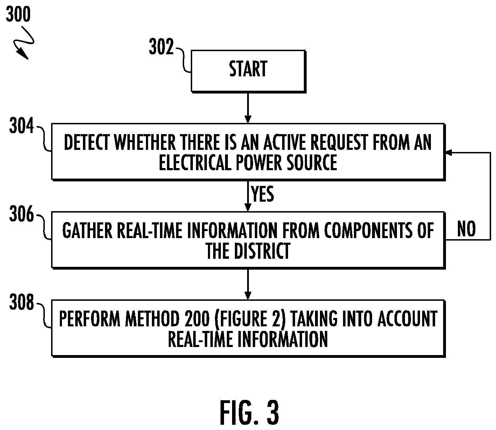

Figure 3 schematically shows a method 300 for DSM of power demand for the district 18. As discussed above, DSM enables an power source to balance or distribute power in an efficient manner, and in some cases, to reduce overall power consumption. In step 302, the method 300 starts. In one example, the method 300 starts automatically, or without any user input. In another example, the DEMS 26 is programmed to start the method 300 at predetermined time intervals. In another example, the method 300 starts based on receipt of a request from a power source by the DEMS 26.

In step 304, the DEMS 26 detects whether there is an active request from the power source. If no, the method re-starts at step 302.

A request from the power source requests the DEMS 26 to change the power demand of the district 18 to a new power demand. For instance, the power source may send requests at times of peak power usage to request the district 18 power consumption be lowered. If there is an active request, in step 306, the DEMS 26 gathers real-time information about the power consumption of the district 18. For instance, the information can include measurements of operating parameters related to energy consumption for the various loads 22, 24. The information can also include forecasted power demand for the individual loads 22, 24 and/or buildings 20. The forecasts can be calculated by the DEMS 26 or can be supplied by a user/operator to the DEMS 26. The information can also include market information about the price of power.

In some examples, the information includes the power flexibility for the buildings 20 and loads 22. Power flexibility represents an acceptable increase or reduction (e.g., a change) in the power demand of the building 20/load 22 from a previous power demand. In some examples, the power flexibility is a range (e.g., it has an upper and lower bounds). An "acceptable" increase or reduction in the power demand of the building 20/load 22 means the building 20/load 22 is still able to meet predetermined requirements, such as occupant comfort requirements. For instance, power flexibility of a building 20 may be based on building occupancy, external climate, occupant comfort requirements, or other variables. The DEMS 26 also gathers information from energy storage device 23a regarding energy availability. The DEMS 26 also gathers information from generator 23b regarding its capacity to generate power.

In step 308, the DEMS 26 performs the method 200, taking into account the information from step 306. That is, the information from step 306 informs the formulation of the optimization control problem in step 208, for instance, by dictating inputs or outputs. Further, as discussed above, in step 208, the method 200 can take into account a request from an power source when formulating the optimization control problem. The resulting rules therefore take into account the request from the power source and real-time information about power consumption of the district 18. For instance, a resulting rule may be that the generators 23b supplement power being supplied by the power source during while a request from the power source is active. Another example rule is that the energy storage device 23a deplete its energy reserve while a request from the power source is active. Another rule may be that the buildings 20 operate in a lower power consumption mode during the fast demand event.

Optionally, the method 300 repeats. As discussed above, the method 300 can re-start automatically, at predetermined time intervals, or upon a request from the power source.

In this way, the DEMS 26 takes into account real-time information about the power consumption of the district 18, the district 18 topology, and the request from the power source to optimize power consumption of the district 18. As with the method 200, the method 300 is applicable to any district 18, irrespective of particular district 18 characteristics. Furthermore, the method 300 is adapted for the particular district 18 characteristics because the district 18 topology is taken into account, which provides improved optimization and control of the power consumption of the district 18 and thus more efficient response to requests from the power source.

The preceding description is exemplary rather than limiting in nature. Variations and modifications to the disclosed examples may become apparent to those skilled in the art that do not necessarily depart from the scope of this invention as defined by the claims. The scope of legal protection given to this disclosure can only be determined by studying the following claims.

## Claims

1. A method of controlling power consumption for a district (18), comprising:
discovering (204) a topology of the district; and
solving (210) an optimization control problem that represents optimized power consumption of the district over time, the optimization control problem being based on the topology of the district.

2. The method of claim 1, further comprising communicating (214) the solution of the optimization control problem to at least one component of the district for implementation.

3. The method of claim 2, wherein the at least one component includes at least one of a powered system/device (24), a power storage device (23a), and a generator (23b).

4. The method of claim 1, 2 or 3, further comprising translating (212) the solution of the optimization control problem into a human-readable format, optionally wherein the human-readable format includes rules.

5. The method of any preceding claim, wherein the discovering (204) includes discovering nodes in the district (18), optionally further comprising characterizing (206) the nodes, and wherein the optimization control problem is based on a character of the nodes.

6. The method of any preceding claim, wherein the optimization control problem is a min-max problem.

7. The method of any preceding claim, wherein the method is performed by a district energy management system (26).

8. A method of responding to a request from a power source, comprising:
detecting (304) whether there is an active request from a power source;
gathering (306) real-time information about power consumption from components in a district (18); and
solving an optimization control problem that represents optimized power consumption of the district over time when there is an active request from a power source, the optimization control problem being based on the active request from the power source and on the real-time information about power consumption from components in a district.

9. The method of claim 8, further comprising discovering (204) a topology of the district (18), and wherein the optimization control problem is based on the topology of the district.

10. The method of claim 9, wherein the discovering (204) includes discovering nodes in the district (18), optionally further comprising characterizing (206) the nodes, and wherein the optimization control problem is based on a character of the nodes.

11. The method of claim 8, 9 or 10, further comprising translating the solution of the optimization control problem into a human-readable format, optionally wherein the human-readable format includes rules.

12. The method of any of claims 8 to 11, wherein the optimization control problem is a min-max problem.

13. A district energy management system (26), comprising:
a computing device, the computing device configured to discover (204) a topology of a district (18), solve (210) an optimization control problem that represents optimized power consumption of the district over time, the optimization control problem being based on the topology of the district; and communicate (214) the solution of the optimization control problem to at least one component in the district.

14. The district energy management system (26) of claim 13, wherein the at least one component includes at least one of a powered system/device (24), a power storage device (23a), and a generator (23b).

15. The district energy management system (26) of claim 13 or 14, wherein the district includes at least one building (20), the at least one building includes at least one component, and wherein the communicating (214) includes communication via a building energy management system (28) for the at least one building, and/or
wherein the district energy management system is operable to receive requests from a power source.
